# EUROPEAN PATENT SPECIFICATION

(11) **EP 3 276 501 B1**
(45) Date of publication and mention of the grant of the patent: **18.03.2020**
(21) Application number: 15895495.8
(22) Date of filing: 15.12.2015
(51) Int. Cl.: H04L 12/801

(54) **TRAFFIC CLASSIFICATION METHOD AND DEVICE, AND STORAGE MEDIUM**
VERFAHREN UND VORRICHTUNG ZUR VERKEHRSKLASSIFIZIERUNG UND SPEICHERMEDIUM
PROCÉDÉ ET DISPOSITIF DE CLASSIFICATION DE TRAFIC, ET SUPPORT DE STOCKAGE

(30) Priority: 18.06.2015 CN 201510341289
(43) Date of publication of application: 31.01.2018
(73) Proprietor: Sanechips Technology Co., Ltd., Shenzhen, Guangdong 518055 (CN)
(72) Inventor: CHENG, Chen, Shenzhen Guangdong 518055 (CN)
(74) Representative: Lavoix
(86) International application number: PCT/CN2015/097442
(87) International publication number: WO 2016/201930

(56) References cited:
- CN-A- 1 477 494
- CN-A- 101 753 445
- CN-A- 104 462 144
- CN-A- 104 462 144
- CN-A- 104 468 381
- KR-A- 20120 049 572
- US-A1- 2005 254 502
- US-A1- 2008 243 748
- US-A1- 2008 243 748
- US-A1- 2015 127 900

## Description

### TECHNICAL FIELD

The disclosure relates to a network switching technology, and particularly to a parallel hash lookup-based flow classification method and device and a storage medium.

### BACKGROUND

Along with rapid development of the Internet, an interface rate of a core router configured for backbone network interconnection reaches 400Gbps, and such a rate requires a lookup rate of an Access Control List (ACL) lookup module of the core router under a condition of supporting a high-capacity rule set to reach hundreds of millions and even billions per second.

ACL lookup relates to multiple matching manners of multiple domains, including accurate matching, prefix matching, mask matching and range matching, and a data structure is complex. There have been many mature data structures and algorithms at present, including tree-like lookup, a heuristic algorithm and the like, but it is difficult to implement these structures through hardware, so that a high-speed lookup requirement may not be met. At present, a Ternary Content Addressable Memory (TCAM)-based hardware lookup method is popular.

A TCAM is a technology widely applied to a lookup module at present, and a lookup process is simple. However, for meeting a lookup rate requirement of 400Gbps, multiple TCAMs are required to be scheduled for lookup, so that power consumption and heat dissipation become serious problems. In addition, with development of the Internet Protocol Version 6 (IPv6), a width of rules is greatly increased compared with Internet Protocol Version 4 (IPv4), which further increases TCAM-based lookup cost and power consumption. A length of a common IPv6 key value reaches 640bit. For a conventional TCAM, lookup for a key value of 640bit may be performed once by continuously initiating a lookup instruction twice, so that lookup performance is also reduced.

At present, a tree-like structure is mainly adopted, such as a typical Trie tree distinguished by bits, a Hicut algorithm, Hypercut algorithm and the like distinguished according to characteristics of a rule set, and a series of Request For Comments (RFCs) and the like distinguished by regions in rule items. Their common characteristic is that the rule set is grouped according to different types to achieve a purpose of rapid lookup. However, there is a common limit to these algorithms, and a part of rules are required to be copied to meet an algorithm integrity requirement. When the rule set is small in scale (usually below 1k), there are not so many rules required to be copied, so that a storage space may not be influenced so much. However, when the rule set is continuously enlarged, influence brought by copying is non-negligible, and a space required by a hash key value set corresponding to each rule in each type of rule subset is geometrically increased. During a practical application, particularly an application of a core router, a rule set has a size of tens of thousands and even hundreds of thousands, and the above algorithm requires huge memory overhead, which is difficult to implement during the practical application.

The document US 200 5/0254502 discloses a packet classification method through hierarchical rulebase partitioning. According to the method, a hash table is produced on the basis of the sub-rulebases. In addition, the document CN 104462144 discloses a search method and device of packet classification rules.

### SUMMARY

In order to solve the technical problem, embodiments of the disclosure provide a flow classification method and device and a storage medium.

A flow classification method provided by an embodiment of the disclosure may include:
multiple rules in a rule set are classified according to selected characteristics to obtain one or more rule subsets;
hash storage is stored according to each classified rule subset; and
during rule lookup, hash lookup in each of hash storage units in a storage array is performed according to hash key values of the rules. The storage array includes a plurality of hash storage units in rows and a plurality of hash storage units in columns, and serial pipeline lookup is performed on the hash storage units of each row and parallel lookup is performed on the hash storage units of each column.

In the embodiment of the disclosure, rules in the rule set are formed by one or more characteristics, and each characteristic is represented by a characteristic value.

The operation of classifying the multiple rules in the rule set to obtain the one or more rule subsets according to the selected characteristics includes:
for a first characteristic or first group of characteristics in the rule set, all rules with different characteristic values are selected and combined into a first type of rule
wherein the first characteristic or the first group of characteristics supports a hash lookup manner.

In the embodiment of the disclosure, the operation of classifying the multiple rules in the rule set to obtain the one or more rule subsets according to the selected characteristics may further include:
for the rules, except the first type of rule subset, in the rule set, all rules with different characteristic values of a second characteristic or second group of characteristics are selected and combined into a second type of rule subset.

For the rules, except all the rule subsets, in the rule set, all rules with different characteristic values of one or more characteristics are selected and combined into a rule subset until the rules in the rule set are completely classified.

In the embodiment of the disclosure, the method may further include:
when a number of rules in a classified rule subset is smaller than or equal to a first threshold value, a current characteristic is replaced with another characteristic, and all rules with different characteristic values are selected and combined into a rule subset.

In the embodiment of the disclosure, the method may further include:
when a number of the rules, except all the rule subsets, in the rule set is smaller than or equal to a second threshold value, classification is terminated, and the rules are combined, except all the rule subsets, in the rule set into a type of rule subset.

In the embodiment of the disclosure, the operation of performing hash storage on each classified rule subset may include:
a hash key value corresponding to each rule in each type of rule subset is set as follows: the characteristics used for classification are set to be the corresponding characteristic values, and the characteristics not used for classification are set to be 0.

Each rule in each type of rule subset is set by virtue of hash entries.

A flow classification device provided by an embodiment of the disclosure may include:
a classification unit, configured to classify multiple rules in a rule set to obtain one or more rule subsets according to selected characteristics;
a storage unit, configured to perform hash storage according to each classified rule subset; and
a lookup unit, configured to, during rule lookup, perform hash lookup in each of hash storage units in the storage unit according to hash key values of the rules. The storage array includes a plurality of hash storage units in rows and a plurality of hash storage units in columns. The lookup unit performs serial pipeline lookup on the hash storage units of each row and performs parallel lookup on the hash storage units of each column.

In the embodiment of the disclosure, rules in the rule set are formed by one or more characteristics, and each characteristic is represented by a characteristic value.

The classification unit is further configured to, for a first characteristic or first group of characteristics in the rule set, select and combine all rules with different characteristic values into a first type of rule wherein the first characteristic or the first group of characteristics supports a hash lookup manner.

In the embodiment of the disclosure, the classification unit may further be configured to, for the rules, except the first type of rule subset, in the rule set, select and combine all rules with different characteristic values of a second characteristic or second group of characteristics into a second type of rule subset; and for the rules, except all the rule subsets, in the rule set, select and combine all rules with different characteristic values of one or more characteristics into a rule subset until the rules in the rule set are completely classified.

In the embodiment of the disclosure, the classification unit may further be configured to, when a number of rules in a classified rule subset is smaller than or equal to a first threshold value, replace a current characteristic with another characteristic, and select and combine all rules with different characteristic values into a rule subset.

In the embodiment of the disclosure, the classification unit may further be configured to, when a number of the rules, except all the rule subsets, in the rule set is smaller than or equal to a second threshold value, terminate classification, and combine the rules, except all the rule subsets, in the rule set into a type of rule subset.

In the embodiment of the disclosure, the storage unit may further be configured to set a hash key value corresponding to each rule in each type of rule subset as follows: the characteristics used for classification are set to be the corresponding characteristic values, and the characteristics not used for classification are set to be 0. Each rule in each type of rule subset is stored by virtue of hash entries.

In the embodiment of the disclosure, the storage unit forms a storage array by a certain number of parallel hash storage units, and solves the problems of hash conflict and excessive classification rules in a manner of providing high parallelism.

A storage medium is provided, in which a computer program may be stored, the computer program being configured to execute the flow classification method.

In the technical solutions of the embodiments of the disclosure, a series of classification principles are made according to a rule set in a practical application, all the rules are classified in a unified manner, and the large-scale rule set is divided into multiple small-scale rule subsets. Formation of these rule subsets is determined by macro rule features, and is not completely dependent on rule type prejudgment and predefinition, so that such a classification manner is flexible and variable. Hash storage is performed on each classified rule subset, and during rule lookup, hash lookup is performed in each parallel hash unit according to the hash key values of the rules. The technical solutions of the embodiments of the disclosure are implemented independently of a TCAM, effectively reduce a memory requirement at the same time of ensuring a high-performance table lookup requirement, suitable for hardware implementation, and meet a high-capacity and high-speed packet classification lookup requirement.

### BRIEF DESCRIPTION OF DRAWINGS

Fig. 1 is a flowchart of a flow classification method according to an embodiment of the disclosure.
Fig. 2 is a schematic diagram of classification with a single characteristic according to an embodiment of the disclosure.
Fig. 3 is a schematic diagram of classification with multiple characteristics according to an embodiment of the disclosure.
Fig. 4 is a schematic diagram of classification with multiple characteristics including mask characteristics according to an embodiment of the disclosure.
Fig. 5 is a block diagram of a hash algorithm unit according to an embodiment of the disclosure.
Fig. 6 is a block diagram of implementation of flow classification lookup through a parallel hash group according to an embodiment of the disclosure.
Fig. 7 is a structure diagram of a flow classification device according to an embodiment of the disclosure.

### DETAILED DESCRIPTION

In order to make characteristics and technical contents of the embodiments of the disclosure understood in more detail, implementation of the embodiments of the disclosure will be described below in detail with reference to the drawings. The appended drawings are only provided for description as references, and are not intended to limit the embodiments of the disclosure.

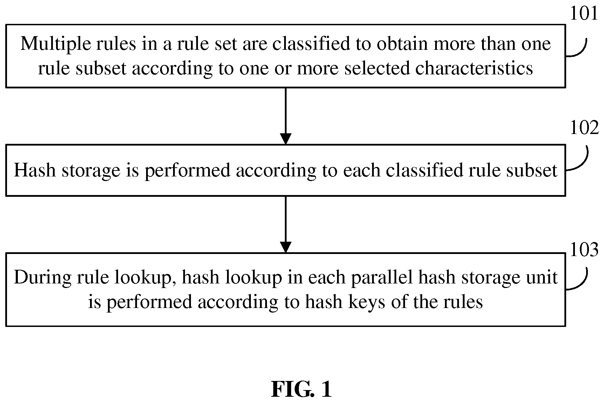

Fig. 1 is a flowchart of a flow classification method according to an embodiment of the disclosure. As shown in Fig. 1, the method includes the following steps.

In Step 101, multiple rules in a rule set are classified according to selected characteristics to obtain one or more rule subsets.

In the embodiment of the disclosure, at first, for a first characteristic or first group of characteristics in rules, all rules with different characteristic values are selected and combined into a first type of rule subset, wherein the first characteristic or the first group of characteristics support hash lookup.

Second, for the rules, except the first type of rule subset, in the rule set, all rules with different characteristic values of a second characteristic or second group of characteristics are selected and combined into a second type of rule subset.

Then, for the rules, except all the rule subsets, in the rule set, all rules with different characteristic values of one or more characteristics are selected and combined into a rule subset until the rules in the rule set are completely classified.

In the embodiment of the disclosure, when the number of rules in a classified rule subset is smaller than or equal to a first threshold value, a current characteristic is replaced, and all rules with different characteristic values are selected and combined into a rule subset.

In the embodiment of the disclosure, when the number of the rules, except all the rule subsets, in the rule set is smaller than or equal to a second threshold value, classification is terminated, and the rules, except all the rule subsets, in the rule set are combined into a type of rule subset.

Specifically, a series of classification principles are made according to a rule set in a practical application, all the rules are classified in a unified manner, and the large-scale rule set is divided into multiple small-scale rule subsets. Formation of these rule subsets is determined by macro rule features, and is not completely dependent on rule type prejudgment and predefinition, so that flexibility and variability are ensured.

During the practical application, each rule is formed by characteristics of multiple data flows, and has the same or similar forming principles in different applications. A common rule is formed by a quintuple (i.e. a source IP, a destination IP, a source port number, a destination port number and a protocol number) and some other characteristics. For a large-scale rule set, each rule must have a different characteristic value distinguished from the other rules, and the rules are classified according to the characteristic values of respective rules.

In Step one, a certain characteristic is examined, rules with a unique characteristic value are extracted from the rule set. Particularly, when a certain characteristic value exists in multiple rules, any one rule is extracted, and the other rules are reserved.

In the embodiment of the disclosure, if the characteristic is not suitable for hash lookup, such as range matching or mask matching, the characteristic may be selected to be skipped, and another characteristic is selected for classification.

In Step two, if there are still unclassified rules in the rule set after Step one, the remaining rules are sequentially examined according to other characteristics, the rules with the unique characteristic values are extracted to form other rule subsets, and if the rules of the rule set may be completely classified during a certain examination, classification stops.

In Step three, if there are still unclassified rules in the rule set after Step two, Steps one and two are repeated, examination and classification are performed again to obtain rule subsets, and if the rules in the rule set may be completely classified during a certain examination, classification stops.

Particularly, if rule subsets classified in some steps are too small, that classification is required to be given up, and another characteristic is selected for examination and classification.

In Step four, if there are still unclassified rules in the rule set after Step three, unique characteristic value examination is performed according to a combination of any two groups or more groups of characteristics (not including range matching), the corresponding rules are extracted, and if the rules in the rule set may be completely classified during a certain examination, classification stops.

Particularly, when multiple characteristics are combined, matching rules of complete matching or prefix are preferably combined. In the embodiment of the disclosure, a reasonable mask is designed for any mask matched characteristic for classification. Here, designing the reasonable mask refers to that an "insignificant" bit in the characteristic for classification is masked and not determined as a factor required to be considered in hash calculation. That is, a characteristic bit not used for classification is set to be 0. For example, when the characteristic for classification is a first characteristic in the rules, the reasonable mask adopts Xzzzz to mark each characteristic in the rules, wherein 'X' represents that each bit of the corresponding characteristic is '1', and 'z' represents that each bit of the corresponding characteristic is '0'.

In Step five, after the above steps are iterated for a limited number of times, all the rules are completely classified. Under a certain condition, the number of the rules classified by the last iteration may be too small, which may increase storage overhead. Therefore, classification may be terminated and the remaining rules form a rule subset after the number of the remaining rules is smaller than a certain value.

In the embodiment of the disclosure, if most of the rules have unique characteristic values only in range matched characteristics, the range matched characteristic values of the remaining rules are required to be extended according to prefixes to extend each range matched rule into multiple prefix matched rules.

A principle for range extension is as follows.

At first, a certain range domain tries to be extended according to prefixes, and rule classification is performed according to Steps one to four; and if the number of rules which may be classified is less than or equal to a first threshold value, other range domains are extended according to prefixes respectively, and the range domain where the number of rules which may be classified is largest and exceeds the first threshold value is determined as an extended domain.

If a classification manner capable of exceeding the first threshold value may not be obtained, range prefix extension over two range domains is considered, and rule classification is performed according to Steps one to four.

Simultaneous prefix extension over more than two range domains should be avoided, otherwise excessive extended entries may be generated and storage resources may be greatly consumed.

After the five steps, the large-scale rule set may be classified into a limited number of rule subsets, and each rule subset includes a certain number of rules.

In Step 102, hash storage is performed according to each classified rule subset.

In the embodiment of the disclosure, a hash key value corresponding to each rule in each type of rule subset is set as follows. The characteristics used for classification are set to be the corresponding characteristic values, and the characteristics not used for classification are set to be 0; and each rule in each type of rule subset is stored by virtue of hash entries.

Specifically, the hash key value corresponding to each rule subset is as follows: characteristics or combinations of the characteristics used for classification are only reserved on original rule entries, the other characteristics which are not used are replaced with '0', and each hash entry stores a rule and a corresponding result and priority information thereof.

Since it is uncertain about the number of the generated rule subsets after classification, sufficient hash storage units are adopted to form a parallel hash group to store all the rule subsets in terms of hardware design; and each rule subset may occupy multiple hash storage units, and each hash storage unit may be allocated to only one rule subset and has a corresponding mask configuration.

In Step 103: during rule lookup, hash lookup in each parallel hash storage unit is performed according to hash key values of the rules.

Specifically, during rule lookup, hash lookup is performed on the hash key values of the rules in each parallel hash unit; and in each hash storage unit, an initial key value of a key value is changed into a key value corresponding to the hash storage unit by virtue of a mask configured by the hash storage unit, then hash calculation is performed on the hash storage unit to obtain an address, and data information of the corresponding address is read for rule matching comparison. In case of successful matching, the rule entry is selected; and the parallel hash group performs arbitration on all the matched rules, and selects a target rule with a highest priority as a returning result according to a flow classification principle.

Particularly, for ensuring lookup completeness and extending applicability of the hardware design, the hardware design also requires a small piece of cache for processing a tiny minority of rules remaining after processing of Step five in Step 102. An experience proves that an optimal system ratio may be achieved when the number of the remaining rules is 1%-5% of the total number of the rules from overall system complexity and utilization rate.

In the embodiment of the disclosure, the large-scale rule set is classified into multiple small-scale rule subsets, and hash lookup may be performed on the rule subsets, thereby implementing storage and lookup of the large-scale rule set by virtue of the parallel hash group. Storage and lookup of the large-scale rule set are supported, a memory requirement is effectively reduced at the same time of ensuring a high-performance table lookup requirement, suitability for hardware implementation is achieved, and a high-capacity and high-speed packet classification lookup requirement is met.

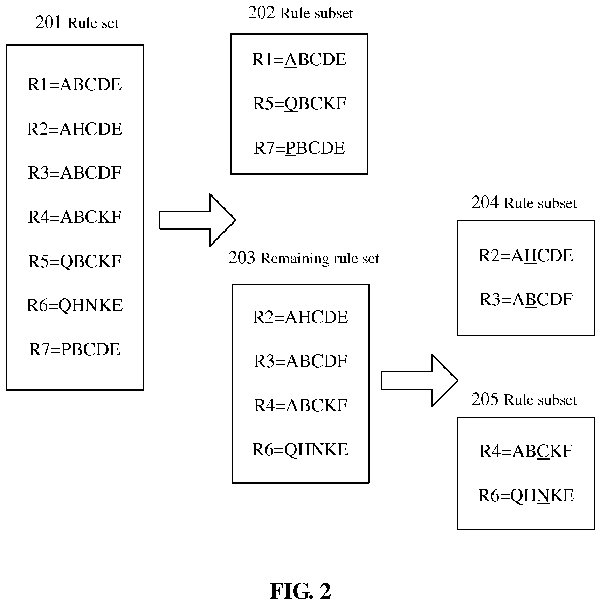

Fig. 2 is a schematic diagram of classification with a single characteristic according to an embodiment of the disclosure. It is supposed that there are seven rules {R1, R2, R3, R4, R5, R6, R7} in a rule set G, and they are formed by five independent characteristics. It is also supposed that all the characteristics are completely matched fields and the characteristics are represented by letters, as shown in 201 in Fig. 2.

According to classification Step one of the embodiment of the disclosure, a certain characteristic of each rule is examined, and here, a first characteristic is examined. It is found that {R1, R2, R3, R4} have the first characteristic 'A', {R5, R6} have the first characteristic 'Q', and {R7} has the first characteristic 'P'; R1 is extracted from the rule group with the characteristic value 'A', R5 is extracted from the rule group with the characteristic value 'Q', the rule R7 with the characteristic value 'P' is extracted, and {R1, R5, R7} form a first rule subset 202; and the remaining rule set 203 includes four rules {R2, R3, R4, R6}.

According to classification Step two, another characteristic is adopted to examine the remaining rules, and here, a second characteristic is examined. It is found that there are two rules with characteristic values 'H' and 'B' respectively, so that R2 with the characteristic value 'H' and R3 with the characteristic value 'B' are extracted to form a second rule subset 204; and the remaining rule set is classified according to a third characteristic, and it is found that R4 and R6 have different characteristic values 'C' and 'N', so that the remaining rule set may be distinguished to form a third rule subset 205 directly by virtue of a third characteristic.

According to the hash storage method of the embodiment of the disclosure, the three rule subsets obtained by classification are stored by virtue of a hash table respectively. The first rule subset is marked with a mask Xzzzz, wherein 'X' represents that each bit of the corresponding characteristic is '1', and 'z' represents that each bit of the corresponding characteristic is '0'. Therefore, when the hash table is inserted, hash key values of R1, R5 and R7 are A0000, Q0000 and P0000. They may be hashed into the hash table. Different storage addresses are calculated for respective rules according to the respective hash key values, and then each rule is stored in the corresponding address.

Particularly, if a hash conflict appears in hashing of a certain rule subset, the conflicting key value is stored in another hash table. For example, in a hash table, if hash key values A0000 and Q0000 are stored at a position A, there exists a hash conflict, and Q0000 or A0000 is stored in another hash table to avoid the conflict. Influence of the hash conflict on hash filling is eliminated in a parallel hash manner. A sufficient number of small hash tables are adopted as storage and lookup devices during implementation, so that it may be considered that hash parallelism is sufficient to eliminate the hash conflict.

Similarly, the second rule subset is marked with a mask zXzzz, hash key values of R2 and R3 for hash calculation are 0H000 and 0B000, respectively, and they are inserted into an unused hash table. The third rule subset is marked with a mask 00X00, respective hash key values of R4 and R6 are 00C00 and 00N00, and they are inserted into an unused hash table.

Of course, different rules are selected from multiple rules with the same characteristic, and different rule subsets may be divided. For example, {R1, R2, R3, R4} have the first characteristic 'A', {R5, R6} have the first characteristic 'Q', and {R7} has the first characteristic 'P'; R2 is extracted from the rule group with the characteristic value 'A', R6 is extracted from the rule group with the characteristic value 'Q', the rule R7 with the characteristic value 'P' is extracted, and {R2, R6, R7} form the first rule subset; and the remaining rule set includes the four rules {R1, R3, R4, R5}. For the rules in the remaining rule set, {R1, R3, R4, R5} have the second characteristic 'B', and may not be classified. The third characteristic is selected. {R1, R3, R4, R5} have the third characteristic 'C', and may not be classified, and a fourth characteristic is selected. {R1, R3} have the fourth characteristic 'D', {R4, R5} have the fourth characteristic 'K', R1 is extracted from the rule group with the characteristic value 'D', R4 is extracted from the rule group with the characteristic value 'K', and {R1, R4} form a second rule subset; and the remaining rule set includes {R3, R5} which automatically form a type of rule subset.

In the solution, each characteristic is sequentially examined to form the rule subsets according to a sequence of the characteristics, that is, the first, second and third characteristics are sequentially examined. Of course, one characteristic may also be selected to divide the rule subsets in another sequence according to a practical rule condition.

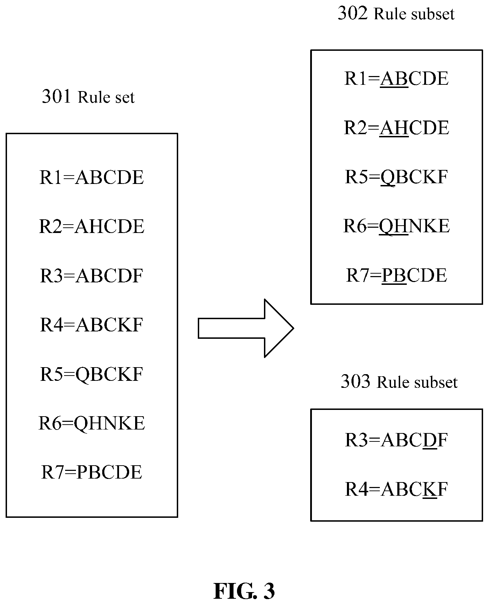

Fig. 3 is a schematic diagram of classification with multiple characteristics according to an embodiment of the disclosure. The rules of Fig. 2 are continued to be used as an example 301 in Fig. 3, and a difference is that a combination of the first and second characteristics is adopted for classification during classification. It is found that there are totally three rules with a characteristic value 'AB', {R1, R3, R4} respectively, and the other rules have respectively unique characteristic values 'AH', 'QB', 'QH' and 'PB' respectively. Therefore, {R1, R2, R5, R6, R7} are extracted to form a first rule subset 302; and then the remaining {R3, R4} are examined, and may be distinguished with the fourth characteristic, so that a second rule subset is formed.

Then, according to the hash storage solution, the first rule subset is inserted into a hash table with a mask configuration XXzzz, and their hash key values are 'AB000', 'AH000', 'QB000', 'QH000' and 'PB000' respectively; and similarly, R3 and R4 are stored into a hash table according to a mask of the fourth characteristic.

Of course, the rule subsets may also be classified with other combined characteristics according to a practical rule condition. For example, the second, third and fourth characteristics are combined for classification to obtain a first rule subset {R1, R2, R4, R6}. The remaining rule set is {R3, R5, R7}, the first characteristic is adopted for classification, and {R3, R5, R7} form a second rule subset.

In the example, the characteristics are supposed to be completely matched. For prefix and mask marking, similar means may be adopted for classification, it is only necessary to perform mask selection within a bit range of each characteristic, and such selection may be implemented by virtue of a heuristic algorithm.

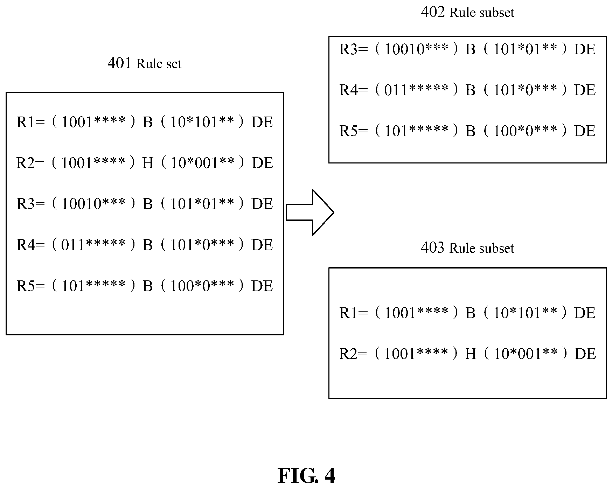

Fig. 4 is a schematic diagram of classification with multiple characteristics including mask characteristics according to an embodiment of the disclosure. As shown in Fig. 4, a first characteristic and third characteristic in a rule set 401 are a prefix domain and a mask domain respectively, and for simplicity, are represented with an 8-bit value, wherein it is true that * represents a corresponding bit 0 or 1 in a rule. A prefix of the first characteristic is examined, and it is found that {R1, R2, R3} have '100', R4 has a characteristic value '011' and R5 has a characteristic value '101' according to a shortest prefix length (the first three bits). In addition, considering that the characteristic for distinguishing has only three bits which may be insufficient to distinguish more rules, it is preferably required to superpose another characteristic for classification, so that a value of a mask domain of a third characteristic is simultaneously considered during classification in the figure.

Furthermore, the value in the third mask domain is examined, and it is found that R1 and R2 have the same mask position and R3, R4 and R5 have the same mask position. Therefore, for maximally utilizing known data, {R3, R4, R5} are extracted to form a first rule subset 402, and {R1, R2} are considered as the remaining rule set. It is not difficult to find that the remaining rule set may be classified to form a second rule subset 403 according to a combination of the second characteristic and the third characteristic.

The first rule subset is classified according to a combination of the first characteristic and the third characteristic, so that a mask configuration corresponding to the first rule subset is (11100000)z(11101000)zz. The second rule subset is classified according to the combination of the second characteristic and the third characteristic, so that a mask configuration of the second rule subset is zX(11011100)zz.

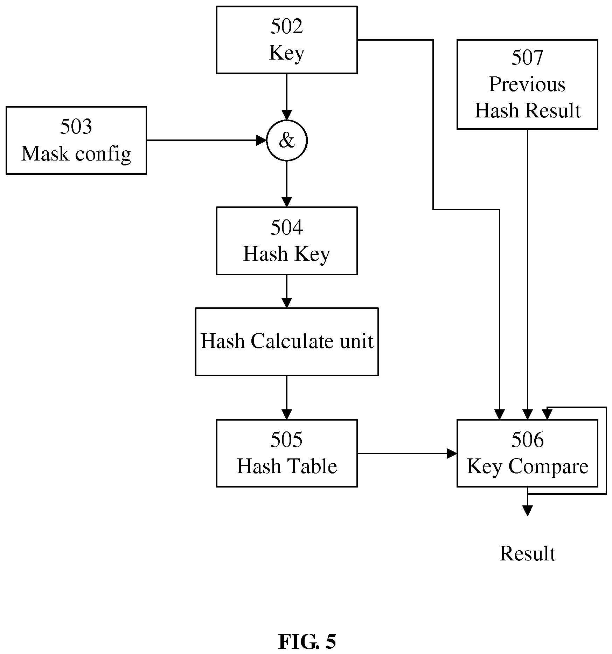

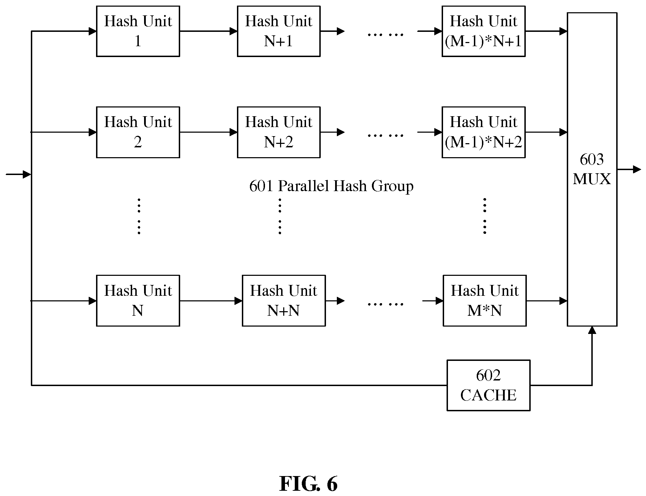

Fig. 5 is a block diagram of a hash algorithm unit according to an embodiment of the disclosure. Fig. 6 is a block diagram of implementation of flow classification lookup through a parallel hash group according to an embodiment of the disclosure. Referring to Fig. 5 and Fig. 6, when a rule lookup key value (Key) 502 is input into a hash calculation unit, an 'And' operation is performed on the key value and a Mask config 503 stored in the hash calculation unit at first to convert the lookup key value into a hash key value (Hash Key) 504 for lookup of a hash table; then, hash calculation is performed on the hash key value 504 to obtain a corresponding address of the hash table; the hash table 505 is looked up with the obtained address to obtain a stored practical rule and result; the key value 502 and a data input key value are input into a key value compare module (Key Compare) 506, and meanwhile, if a previous hash result 507 exists, priorities of the previous hash result and a current hash result are required to be simultaneously compared, and the result with a high priority is determined as the current output result; and finally, a comparison result is output by 506. A hash lookup group forms an M*N lookup array by hash lookup units shown in Fig. 6, an overall capacity of M*N is sufficient to meet a storage space required by a high-capacity rule set, and parallelism of M*N is sufficient to meet a requirement of a hash conflict of each rule subset. Generally speaking, M is determined by a design scale of a Multiplexer (MUX), N is determined by a delay requirement, and the number of M*N is determined by a total required capacity and a capacity of each hash unit.

For example, a lookup key value is 11101, a mask config is 011000, and the 'And' operation is performed on 11101 and 011000 to obtain a hash key value 01100; and hash calculation is performed with the hash key value 011000 to obtain a corresponding address, which is address A, of the hash table, and a rule R1 corresponding to the address A is found in the hash table. If there exists a high-priority result indicating output of a rule B, the final result is a rule R2.

Particularly, during hardware implementation, serial pipeline lookup is performed on the hash units of each row, it is necessary to perform hash key value comparison in each hash unit, it is also necessary to compare the previous hash result with the current hash result, and the result with a high priority is determined as the current hash result. Parallel lookup is required to be simultaneously performed on the hash units of each column, and a hash result of each column is converged into a MUX module 603 after the result of the last column of the hash table is calculated; and the MUX performs priority comparison on all the results, and the result with a high priority is outputted as a final lookup result.

Particularly, for ensuring algorithm completeness, a small independent cache may be selected to be added as a cache module 602 of the parallel hash lookup group. A purpose of the cache is as follows: there inevitably exists specific entries in particularly complex entry forms in a large-scale rule set, for example, the entries have particularly small numbers of effective bits and have mask positions different from most of mask positions, the hash manner may be unsuitable for storing these entries, and at this moment, a small part of cache is adopted for storage.

Here, the cache is logically implemented in a manner of comparing all entries one by one, and may be implemented in, for example, a serial pipeline manner of the hash lookup group, and parallel comparison of low parallelism is adopted for each stage.

During parallel hash calculation, the key values are simultaneously inputted into the cache module for comparison, final results are also converged into the MUX module for aggregation with the lookup results of the parallel hash lookup group, and the MUX module performs comparison to obtain a final result.

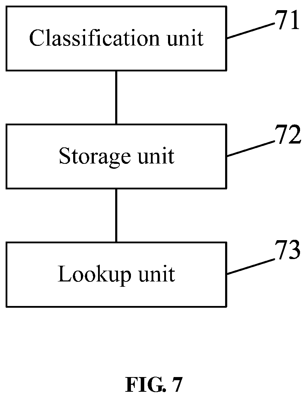

Fig. 7 is a structure diagram of a flow classification device according to an embodiment of the disclosure. As shown in Fig. 7, the device includes:
a classification unit 71, configured to classify multiple rules in a rule set to obtain one or more rule subsets according to selected characteristics;
a storage unit 72, configured to perform hash storage according to each classified rule subset; and
a lookup unit 73, configured to, during rule lookup, perform hash lookup in each parallel hash storage unit according to hash key values of the rules.

In the embodiment of the disclosure, rules in the rule set are formed by one or more characteristics, and each characteristic is represented by a corresponding characteristic value; and
the classification unit 71 is further configured to, for a first characteristic or first group of characteristics in the rule set, select and combine all rules with different characteristic values into a first type of rule subset, wherein the first characteristic or the first group of characteristics supports a hash lookup manner.

In the embodiment of the disclosure, the classification unit 71 is further configured to, for the rules, except the first type of rule subset, in the rule set, select and combine all rules with different characteristic values of a second characteristic or second group of characteristics into a second type of rule subset; and for the rules, except all the rule subsets, in the rule set, select and combine all rules with different characteristic values of one or more characteristics into a rule subset until the rules in the rule set are completely classified.

In the embodiment of the disclosure, the classification unit 71 is further configured to, when the number of rules in a classified rule subset is smaller than or equal to a first threshold value, replace a current characteristic, and select and combine all rules with different characteristic values into a rule subset.

In the embodiment of the disclosure, the classification unit 71 is further configured to, when the number of the rules, except all the rule subsets, in the rule set is smaller than or equal to a second threshold value, terminate classification, and combine the rules, except all the rule subsets, in the rule set into a type of rule subset.

In the embodiment of the disclosure, the storage unit 72 is further configured to set a hash key value corresponding to each rule in each type of rule subset as follows: setting the characteristics used for classification to be the corresponding characteristic values, and setting characteristics not used for classification to be 0; and storing each rule in each type of rule subset by virtue of hash entries.

Those skilled in the art should know that a function realized by each unit in the flow classification device shown in Fig. 7 may be understood with reference to related descriptions of the flow classification method. The function of each unit in the flow classification device shown in Fig. 7 may be realized through a program running on a processor, and may also be realized through a specific logic circuit.

An embodiment of the disclosure further records a storage medium, in which a computer program is stored, the computer program being configured to execute the flow classification method of each abovementioned embodiment.

In some embodiments provided by the disclosure, it should be understood that the disclosed equipment and method may be implemented in another manner. The equipment embodiment described above is only schematic, and for example, division of the units is only logic function division, and other division manners may be adopted during practical implementation. For example, multiple units or components may be combined or integrated into another system, or some characteristics may be neglected or not executed. In addition, coupling, or direct coupling or communication connection between each displayed or discussed component may be indirect coupling or communication connection, implemented through some interfaces, of the device or the units, and may be electrical and mechanical or adopt other forms.

The abovementioned units described as separate parts may or may not be physically separated, and parts displayed as units may or may not be physical units, and namely may be located in the same place, or may also be distributed to multiple network units. Part or all of the units may be selected to achieve the purpose of the solutions of the embodiments according to a practical requirement.

In addition, each function unit in each embodiment of the disclosure may be integrated into a processing unit, each unit may also exist independently, and two or more than two unit may also be integrated into a unit. The abovementioned integrated unit may be implemented in a hardware form, and may also be implemented in form of hardware and software function unit.

Those skilled in the art should know that: all or part of the steps of the abovementioned method embodiment may be implemented by instructing related hardware through a program, the abovementioned program may be stored in a computer-readable storage medium, and the program is executed to execute the steps of the abovementioned method embodiment; and the storage medium includes: various media capable of storing program codes such as mobile storage equipment, a Read-Only Memory (ROM), a magnetic disk or an optical disk.

Or, when being implemented in form of software function module and sold or used as an independent product, the integrated unit of the disclosure may also be stored in a computer-readable storage medium. Based on such an understanding, the technical solutions of the embodiments of the disclosure substantially or parts making contributions to the conventional art may be embodied in form of software product, and the computer software product is stored in a storage medium, including a plurality of instructions configured to enable a piece of computer equipment (which may be a personal computer, a server, network equipment or the like) to execute all or part of the method in each embodiment of the disclosure. The abovementioned storage medium includes: various media capable of storing program codes such as mobile storage equipment, a ROM, a magnetic disk or an optical disk.

The above is only the specific implementation made of the disclosure and not intended to limit the scope of protection which is defined by the appended claims. the claims.

### INDUSTRIAL APPLICABILITY

According to the disclosure, a series of classification principles are made according to a rule set in a practical application, all the rules are classified in a unified manner, and the large-scale rule set is divided into multiple small-scale rule subsets. Formation of these rule subsets is determined by macro rule features, and is not completely dependent on rule type prejudgment and predefinition, so that such a classification manner is flexible and variable. Hash storage is performed on each classified rule subset, and during rule lookup, hash lookup is performed in each parallel hash unit according to the hash key values of the rules. The technical solutions of the embodiments of the disclosure are implemented independently of a TCAM, effectively reduce a memory requirement at the same time of ensuring a high-performance table lookup requirement, are suitable for hardware implementation, and meet a high-capacity and high-speed packet classification lookup requirement.

## Claims

1. A flow classification method, comprising:
classifying (101) multiple rules in a rule set to obtain one or more rule subsets according to one or more selected characteristics;
performing (102) hash storage according to each classified rule subset; and
during rule lookup, performing (103) hash lookup in each of hash storage units in a storage array according to hash key values of the rules,
**characterized in that**, the storage array comprises a plurality of hash storage units in rows and a plurality of hash storage units in columns, and
wherein performing hash lookup comprises performing serial pipeline lookup on the hash storage units of each row and performing parallel lookup on the hash storage units of each column,
wherein the rules in the rule set are formed by one or more characteristics, and each characteristic is represented by a characteristic value; and
wherein classifying (101) the multiple rules in the rule set to obtain the one or more rule subsets according to the one or more selected characteristics comprises:
for a first characteristic or first group of characteristics in the rule set, selecting and combining all rules with different characteristic values into a first type of rule subset, wherein the first characteristic or the first group of characteristics supports a hash lookup manner.

2. The flow classification method according to claim 1, wherein classifying (101) the multiple rules in the rule set to obtain the one or more rule subsets according to the one or more selected characteristic further comprises:
for the rules, except the first type of rule subset, in the rule set, selecting and combining all rules with different characteristic values of a second characteristic or second group of characteristics into a second type of rule subset; and
for the rules, except all the rule subsets, in the rule set, selecting and combining all rules with different characteristic values of one or more characteristics into a rule subset until the rules in the rule set are completely classified.

3. The flow classification method according to claim 1 or 2, further comprising:
when the number of rules in a classified rule subset is smaller than or equal to a first threshold value, replacing a current characteristic with another characteristic, and selecting and combining all rules with different characteristic values into a rule subset.

4. The flow classification method according to claim 1 or 2, further comprising:
when the number of the rules, except all the rule subsets, in the rule set is smaller than or equal to a second threshold value, terminating classification, and combining the rules, except all the rule subsets, in the rule set into a type of rule subset.

5. The flow classification method according to any one of claims 1-2, wherein performing (102) hash storage on each classified rule subset comprises:
setting a hash key value corresponding to each rule in each type of rule subset as follows: setting the characteristics used for classification to be the corresponding characteristic values, and setting characteristics not used for classification to be 0; and
storing each rule in each type of rule subset by virtue of hash entries.

6. A flow classification device, comprising:
a classification unit (71), configured to classify multiple rules in a rule set to obtain one or more rule subsets according to one or more selected characteristics;
a storage unit (72), configured to perform hash storage according to each classified rule subset; and
a lookup unit (73), configured to, during rule lookup, perform hash lookup in each of hash storage units in the storage unit according to hash key values of the rules,
**characterized in that**, the storage array comprises a plurality of hash storage units in rows and a plurality of hash storage units in columns, and
wherein the lookup unit (73) performs serial pipeline lookup on the hash storage units of each row and performs parallel lookup on the hash storage units of each column,
wherein the rules in the rule set are formed by one or more characteristics, and each characteristic is represented by a characteristic value; and
the classification unit (71) is further configured to, for a first characteristic or first group of characteristics in the rule set, select and combine all rules with different characteristic values into a first type of rule subset,
wherein the first characteristic or the first group of characteristics supports a hash lookup manner.

7. The flow classification device according to claim 6, wherein the classification unit (71) is further configured to, for the rules, except the first type of rule subset, in the rule set, select and combine all rules with different characteristic values of a second characteristic or second group of characteristics into a second type of rule subset; and for the rules, except all the rule subsets, in the rule set, select and combine all rules with different characteristic values of one or more characteristics into a rule subset until the rules in the rule set are completely classified.

8. The flow classification device according to claim 6 or 7, wherein the classification unit (71) is further configured to, when the number of rules in a classified rule subset is smaller than or equal to a first threshold value, replace a current characteristic with another characteristic, and select and combine all rules with different characteristic values into a rule subset.

9. The flow classification device according to claim 6 or 7, wherein the classification unit (71) is further configured to, when the number of the rules, except all the rule subsets, in the rule set is smaller than or equal to a second threshold value, terminate classification, and combine the rules, except all the rule subsets, in the rule set into a type of rule subset.

10. The flow classification device according to any one of claims 6-7, wherein the storage unit (72) is further configured to set a hash key value corresponding to each rule in each type of rule subset as follows: setting the characteristics used for classification to be the corresponding characteristic values, and setting characteristics not used for classification to be 0; and store each rule in each type of rule subset by virtue of hash entries.

11. A storage medium having a computer program stored therein, which, when executed by a computing device, causes said computing device to perform the flow classification method according to any one of claims 1-5.

## Patentansprüche

1. Flussklassifizierungsverfahren, umfassend:
Klassifizieren (101) mehrerer Regeln in einem Regelsatz, um einen oder mehrere Regelteilsätze gemäß einem oder mehreren ausgewählten Charakteristika zu erhalten,
Durchführen (102) einer Hash-Speicherung gemäß jedem klassifizierten Regelteilsatz und
während des Regelnachschlagens Durchführen (103) eines Hash-Nachschlagens in jeder von Hash-Speichereinheiten in einem Speicher-Array gemäß Hash-Schlüsselwerten der Regeln,
**dadurch gekennzeichnet, dass** das Speicher-Array mehrere Hash-Speichereinheiten in Zeilen und mehrere Hash-Speichereinheiten in Spalten umfasst, und
wobei das Durchführen des Hash-Nachschlagens das Durchführen eines seriellen Pipeline-Nachschlagens an den Hash-Speichereinheiten jeder Zeile und das Durchführen eines parallelen Nachschlagens an den Hash-Speichereinheiten jeder Spalte umfasst,
wobei die Regeln in dem Regelsatz durch ein oder mehrere Charakteristika gebildet werden und jedes Charakteristikum durch einen charakteristischen Wert dargestellt wird und
wobei das Klassifizieren (101) der mehreren Regeln in dem Regelsatz, um den einen oder die mehreren Regelteilsätze gemäß einem oder mehreren ausgewählten Charakteristika zu erhalten, Folgendes umfasst:
für ein erstes Charakteristikum oder eine erste Gruppe von Charakteristika in dem Regelsatz Auswählen und Kombinieren aller Regeln mit verschiedenen charakteristischen Werten zu einem ersten Typ von Regelteilsatz, wobei das erste Charakteristikum oder die erste Gruppe von Charakteristika eine Hash-Nachschlageweise unterstützt.

2. Flussklassifizierungsverfahren nach Anspruch 1, wobei das Klassifizieren (101) der mehreren Regeln in dem Regelsatz, um den einen oder die mehreren Regelteilsätze gemäß einem oder mehreren ausgewählten Charakteristika zu erhalten, Folgendes umfasst:
für die Regeln in dem Regelsatz mit Ausnahme des ersten Typs von Regelteilsatz Auswählen und Kombinieren aller Regeln mit verschiedenen charakteristischen Werten eines zweiten Charakteristikums oder einer zweiten Gruppe von Charakteristika zu einem zweiten Typ von Regelteilsatz, und
für die Regeln in dem Regelsatz mit Ausnahme aller Regelteilsätze Auswählen und Kombinieren aller Regeln mit verschiedenen charakteristischen Werten eines oder mehrerer Charakteristika zu einem Regelteilsatz, bis die Regeln in dem Regelsatz vollständig klassifiziert sind.

3. Flussklassifizierungsverfahren nach Anspruch 1 oder 2, ferner Folgendes umfassend:
wenn die Anzahl von Regeln in einem klassifizierten Regelteilsatz kleiner als oder gleich einem ersten Schwellenwert ist, Ersetzen eines aktuellen Charakteristikums durch eine anderes Charakteristikum und Auswählen und Kombinieren aller Regeln mit verschiedenen charakteristischen Werten zu einem Regelteilsatz.

4. Flussklassifizierungsverfahren nach Anspruch 1 oder 2, ferner Folgendes umfassend:
wenn die Anzahl der Regeln in dem Regelsatz mit Ausnahme aller Regelteilsätze kleiner als oder gleich einem zweiten Schwellenwert ist, Beenden der Klassifizierung und Kombinieren der Regeln in dem Regelsatz mit Ausnahme aller Regelteilsätze zu einem Typ von Regelteilsatz.

5. Flussklassifizierungsverfahren nach einem der Ansprüche 1 bis 2, wobei das Durchführen (192) einer Hash-Speicherung an jedem klassifizierten Regelteilsatz Folgendes umfasst:
Festlegen eines Hash-Schlüsselwerts entsprechend jeder Regel in jedem Typ von Regelteilsatz wie folgt: Festlegen der zur Klassifizierung verwendeten Charakteristika als die entsprechenden charakteristischen Werte und Festlegen von nicht für die Klassifizierung verwendeten Charakteristika als 0 und
Speichern jeder Regel in jedem Typ von Regelteilsatz anhand von Hash-Einträgen.

6. Flussklassifizierungsvorrichtung, umfassend:
eine Klassifizierungseinheit (71), die dafür gestaltet ist, mehrere Regeln in einem Regelsatz zu klassifizieren, um einen oder mehrere Regelteilsätze gemäß einem oder mehreren ausgewählten Charakteristika zu erhalten,
eine Speichereinheit (72), die dafür gestaltet ist, eine Hash-Speicherung gemäß jedem klassifizierten Regelteilsatz durchzuführen, und
eine Nachschlageinheit (73), die dafür gestaltet ist, während des Regelnachschlagens ein Hash-Nachschlagen in jeder von Hash-Speichereinheiten in der Speichereinheit gemäß Hash-Schlüsselwerten der Regeln durchzuführen,
**dadurch gekennzeichnet, dass** das Speicher-Array mehrere Hash-Speichereinheiten in Zeilen und mehrere Hash-Speichereinheiten in Spalten umfasst, und
wobei die Nachschlageinheit (73) ein serielles Pipeline-Nachschlagen an den Hash-Speichereinheiten jeder Zeile und ein paralleles Nachschlagen an den Hash-Speichereinheiten jeder Spalte durchführt,
wobei die Regeln in dem Regelsatz durch ein oder mehrere Charakteristika gebildet sind und jedes Charakteristikum durch einen charakteristischen Wert dargestellt ist, und
die Klassifizierungseinheit (71) ferner dafür gestaltet ist, für ein erstes Charakteristikum oder eine erste Gruppe von Charakteristika in dem Regelsatz alle Regeln mit verschiedenen charakteristischen Werten auszuwählen und zu einem ersten Typ von Regelteilsatz zu kombinieren,
wobei das erste Charakteristikum oder die erste Gruppe von Charakteristika eine Hash-Nachschlageweise unterstützt.

7. Flussklassifizierungsvorrichtung nach Anspruch 6, wobei die Klassifizierungseinheit (71) ferner dafür gestaltet ist, für die Regeln in dem Regelsatz mit Ausnahme des ersten Typs von Regelteilsatz und alle Regeln mit verschiedenen charakteristischen Werten eines zweiten Charakteristikums oder einer zweiten Gruppe von Charakteristika auszuwählen und zu einem zweiten Typ von Regelteilsatz zu kombinieren, und für die Regeln des Regelsatzes mit Ausnahme aller Regelteilsätze alle Regeln mit verschiedenen charakteristischen Werten eines oder mehrerer Charakteristika auszuwählen und zu einem Regelteilsatz zu kombinieren, bis die Regeln in dem Regelsatz vollständig klassifiziert sind.

8. Flussklassifizierungsvorrichtung nach Anspruch 6 oder 7, wobei die Klassifizierungseinheit (71) ferner dafür gestaltet ist, wenn die Anzahl von Regeln in einem klassifizierten Regelteilsatz kleiner als oder gleich einem ersten Schwellenwert ist, ein aktuelles Charakteristikum durch ein anderes Charakteristikum zu ersetzen und alle Regeln mit verschiedenen charakteristischen Werten auszuwählen und zu einem Regelteilsatz zu kombinieren.

9. Flussklassifizierungsvorrichtung nach Anspruch 6 oder 7, wobei die Klassifizierungseinheit (71) ferner dafür gestaltet ist, wenn die Anzahl der Regeln in dem Regelsatz mit Ausnahme aller Regelteilsätze kleiner als oder gleich einem zweiten Schwellenwert ist, die Klassifizierung zu beenden und die Regeln in dem Regelsatz mit Ausnahme aller Regelteilsätze zu einem Typ von Regelteilsatz zu kombinieren.

10. Flussklassifizierungsvorrichtung nach einem der Ansprüche 6 bis 7, wobei die Speichereinheit (72) ferner dafür gestaltet ist, einen Hash-Schlüsselwert entsprechend jeder Regel in jedem Typ von Regelteilsatz wie folgt festzulegen: Festlegen der zur Klassifizierung verwendeten Charakteristika als die entsprechenden charakteristischen Werte und Festlegen von nicht für die Klassifizierung verwendeten Charakteristika als 0, und jede Regel in jedem Typ von Regelteilsatz anhand von Hash-Einträgen zu speichern.

11. Speichermedium, auf dem ein Computerprogramm gespeichert ist, das bei Ausführung durch eine Rechenvorrichtung die Rechenvorrichtung dazu veranlasst, das Flussklassifizierungsverfahren nach einem der Ansprüche 1 bis 5 durchzuführen.

## Revendications

1. Procédé de classification de flux, comprenant les étapes ci-dessous consistant à :
classer (101) de multiples règles dans un ensemble de règles, en vue d'obtenir un ou plusieurs sous-ensembles de règles, selon une ou plusieurs caractéristiques sélectionnées ;
mettre en œuvre (102) un stockage de hachage selon chaque sous-ensemble de règles classifiées ; et
au cours d'une recherche de règles, mettre en œuvre (103) une recherche par hachage dans chacune parmi des unités de stockage de hachage, dans un réseau de stockage, selon des valeurs de clés de hachage des règles ;
**caractérisé en ce que** le réseau de stockage comprend une pluralité d'unités de stockage de hachage en lignes, et une pluralité d'unités de stockage de hachage en colonnes ; et
dans lequel l'étape de mise en œuvre d'une recherche par hachage consiste à mettre en œuvre une recherche par pipeline série sur les unités de stockage de hachage de chaque ligne et à mettre en œuvre une recherche parallèle sur les unités de stockage de hachage de chaque colonne ;
dans lequel les règles dans l'ensemble de règles sont formées par une ou plusieurs caractéristiques, et chaque caractéristique est représentée par une valeur de caractéristique ; et
dans lequel l'étape de classification (101) des multiples règles dans l'ensemble de règles, en vue d'obtenir ledit un ou lesdits plusieurs sous-ensembles de règles, selon ladite une ou lesdites plusieurs caractéristiques sélectionnées, comprend les étapes ci-dessous consistant à :
pour une première caractéristique ou un premier groupe de caractéristiques dans l'ensemble de règles, sélectionner et combiner toutes les règles présentant différentes valeurs de caractéristiques en un premier type de sous-ensemble de règles, dans lequel la première caractéristique ou le premier groupe de caractéristiques prend en charge une méthode de recherche par hachage.

2. Procédé de classification de flux selon la revendication 1, dans lequel l'étape de classification (101) des multiples règles dans l'ensemble de règles, en vue d'obtenir ledit un ou lesdits plusieurs sous-ensembles de règles, selon ladite une ou lesdites plusieurs caractéristiques sélectionnées, comprend en outre les étapes ci-dessous consistant à :
pour les règles, à l'exception du premier type de sous-ensemble de règles, dans l'ensemble de règles, sélectionner et combiner toutes les règles présentant différentes valeurs de caractéristiques d'une seconde caractéristique ou d'un second groupe de caractéristiques, en un second type de sous-ensemble de règles ; et
pour les règles, à l'exception de tous les sous-ensembles de règles, dans l'ensemble de règles, sélectionner et combiner toutes les règles présentant différentes valeurs de caractéristiques d'une ou plusieurs caractéristiques, en un sous-ensemble de règles, jusqu'à ce que les règles dans l'ensemble de règles soient entièrement classifiées.

3. Procédé de classification de flux selon la revendication 1 ou 2, comprenant en outre les étapes ci-dessous consistant à :
lorsque le nombre de règles dans un sous-ensemble de règles classifiées est inférieur ou égal à une première valeur de seuil, remplacer une caractéristique actuelle par une autre caractéristique, et sélectionner et combiner toutes les règles présentant différentes valeurs de caractéristiques, en un sous-ensemble de règles.

4. Procédé de classification de flux selon la revendication 1 ou 2, comprenant en outre les étapes ci-dessous consistant à :
lorsque le nombre de règles, à l'exception de tous les sous-ensembles de règles, dans l'ensemble de règles, est inférieur ou égal à une seconde valeur de seuil, mettre fin à la classification, et combiner les règles, à l'exception de tous les sous-ensembles de règles, dans l'ensemble de règles, en un type de sous-ensemble de règles.

5. Procédé de classification de flux selon l'une quelconque des revendications 1 à 2, dans lequel l'étape de mise en œuvre (102) d'un stockage de hachage sur chaque sous-ensemble de règles classifiées comprend les étapes ci-dessous consistant à :
définir une valeur de clé de hachage correspondant à chaque règle dans chaque type de sous-ensemble de règles, comme suit, à savoir : définir les caractéristiques utilisées pour la classification comme étant les valeurs de caractéristiques correspondantes, et définir des caractéristiques non utilisées pour la classification comme étant « 0 » ; et
stocker chaque règle dans chaque type de sous-ensemble de règles en vertu d'entrées de hachage.

6. Dispositif de classification de flux, comprenant :
une unité de classification (71), configurée de manière à classer de multiples règles dans un ensemble de règles, en vue d'obtenir un ou plusieurs sous-ensembles de règles selon une ou plusieurs caractéristiques sélectionnées ;
une unité de stockage (72), configurée de manière à mettre en œuvre un stockage de hachage selon chaque sous-ensemble de règles classifiées ; et
une unité de recherche (73), configurée de manière à, au cours d'une recherche de règles, mettre en œuvre une recherche par hachage dans chacune parmi des unités de stockage de hachage dans l'unité de stockage, selon des valeurs de clés de hachage des règles ;
**caractérisé en ce que** le réseau de stockage comprend une pluralité d'unités de stockage de hachage en lignes, et une pluralité d'unités de stockage de hachage en colonnes ; et
dans lequel l'unité de recherche (73) met en œuvre une recherche par pipeline série sur les unités de stockage de hachage de chaque ligne, et met en œuvre une recherche parallèle sur les unités de stockage de hachage de chaque colonne ;
dans lequel les règles dans l'ensemble de règles sont formées par une ou plusieurs caractéristiques, et chaque caractéristique est représentée par une valeur de caractéristique ; et
l'unité de classification (71) est en outre configurée de manière à, pour une première caractéristique ou un premier groupe de caractéristiques dans l'ensemble de règles, sélectionner et combiner toutes les règles présentant différentes valeurs de caractéristiques, en un premier type de sous-ensemble de règles ;
dans lequel la première caractéristique ou le premier groupe de caractéristiques prend en charge une méthode de recherche par hachage.

7. Dispositif de classification de flux selon la revendication 6, dans lequel l'unité de classification (71) est en outre configurée de manière à, pour les règles, à l'exception du premier type de sous-ensemble de règles, dans l'ensemble de règles, sélectionner et combiner toutes les règles présentant différentes valeurs de caractéristiques d'une seconde caractéristique ou d'un second groupe de caractéristiques, en un second type de sous-ensemble de règles ; et pour les règles, à l'exception de tous les sous-ensembles de règles, dans l'ensemble de règles, sélectionner et combiner toutes les règles présentant différentes valeurs de caractéristiques d'une ou plusieurs caractéristiques, en un sous-ensemble de règles, jusqu'à ce que les règles dans l'ensemble de règles soient entièrement classifiées.

8. Dispositif de classification de flux selon la revendication 6 ou 7, dans lequel l'unité de classification (71) est en outre configurée de manière à, lorsque le nombre de règles dans un sous-ensemble de règles classifiées est inférieur ou égal à une première valeur de seuil, remplacer une caractéristique actuelle par une autre caractéristique, et sélectionner et combiner toutes les règles présentant différentes valeurs de caractéristiques, en un sous-ensemble de règles.

9. Dispositif de classification de flux selon la revendication 6 ou 7, dans lequel l'unité de classification (71) est en outre configurée de manière à, lorsque le nombre des règles, à l'exception de tous les sous-ensembles de règles, dans l'ensemble de règles, est inférieur ou égal à une seconde valeur de seuil, mettre fin à la classification, et combiner les règles, à l'exception de tous les sous-ensembles de règles, dans l'ensemble de règles, en un type de sous-ensemble de règles.

10. Dispositif de classification de flux selon l'une quelconque des revendications 6 à 7, dans lequel l'unité de stockage (72) est en outre configurée de manière à définir une valeur de clé de hachage correspondant à chaque règle dans chaque type de sous-ensemble de règles, comme suit : en définissant les caractéristiques utilisées pour la classification comme étant les valeurs de caractéristiques correspondantes, et en définissant des caractéristiques non utilisées pour la classification comme étant « 0 » ; et en stockant chaque règle dans chaque type de sous-ensemble de règles en vertu d'entrées de hachage.

11. Support de stockage dans lequel est stocké un programme informatique qui, lorsqu'il est exécuté par un dispositif informatique, amène ledit dispositif informatique à mettre en œuvre le procédé de classification de flux selon l'une quelconque des revendications 1 à 5.
